# EUROPEAN PATENT SPECIFICATION

(11) **EP 4 423 566 B1**
(45) Date of publication and mention of the grant of the patent: **16.09.2026**
(21) Application number: 22808811.8
(22) Date of filing: 25.10.2022
(51) Int. Cl.: G02C 7/02

(54) **LENS ELEMENT**
LINSENELEMENT
ÉLÉMENT DE LENTILLE

(30) Priority: 26.10.2021 EP 21315227
(43) Date of publication of application: 04.09.2024
(73) Proprietor: Essilor International, 94220 Charenton-Le-Pont (FR)
(72) Inventor: FERMIGIER, Bruno, 94220 Charenton le Pont (FR); GIRAUDET, Guillaume, 94220 Charenton le Pont (FR); GUILLOT, Matthieu, 94220 Charenton le Pont (FR); HAMLAOUI, Samy, 94220 Charenton le Pont (FR); RIO, David, 94220 Charenton le Pont (FR)
(74) Representative: Innovincia
(86) International application number: PCT/EP2022/079780
(87) International publication number: WO 2023/072930

(56) References cited:
- WO-A1-2015/147758
- WO-A1-2019/166653
- WO-A1-2021/159170
- WO-A2-2009/149116
- CN-A- 110 376 758
- US-A1- 2005 182 489

## Description

### TECHNICAL FIELD

The present disclosure relates to a lens element intended to be worn in front of an eye of a person to suppress, reduce progression or control abnormal refractions of the eye such as myopia or hyperopia. The lens element is in particular an ophthalmic article.

The term "ophthalmic article" is specifically understood to mean a lens, corrective or otherwise, that can be used as spectacle glass, for spectacles for example, particularly sunglasses, goggles, visors or the like or a contact lens worn by the user in direct contact with his eye.

### BACKGROUND OF THE DISCLOSURE

Myopia of an eye is characterized by the fact that the eye focuses distant objects in front of its retina. Hyperopia of an eye is characterized by the fact that the eye focuses distant objects behind its retina. Myopia is usually corrected using a concave lens and hyperopia is usually corrected using a convex lens.

It has been observed that some individuals when corrected, using conventional single vision optical lenses, in particular children, focus inaccurately when they observe an object which is situated at a short distance away, that is to say, in near vision conditions. This is in particular more often the case nowadays with smartphones that children are confronted with and using already in their youngest childhood. Because of this focusing defect on the part of a myopic child which is corrected for his far vision, the image of an object close by is also formed behind his retina, even in the foveal area.

Such focusing defect may have an impact on the progression of myopia of such individuals. One may observe that for most of said individuals the myopia defect tends to increase over time.

Foveal vision corresponds to viewing conditions for which the image of an object looked at is formed by the eye in the central zone of the retina, called the foveal zone.

Peripheral vision corresponds to the perception of elements of a scene that are offset laterally relative to the object looked at, the images of said elements being formed on the peripheral portion of the retina, away from the foveal zone.

The ophthalmic correction with which an ametropic subject is provided is usually adapted for his foveal vision. However, as is known, the correction has to be reduced for the peripheral vision relative to the correction that is determined for the foveal vision. In particular, studies carried out on monkeys have shown that focusing the light far behind the peripheral retina, even with simultaneous light perfectly focused on the fovea, causes the eye to elongate, elongate and therefore causes a myopia defect to increase.

Therefore, it appears that there is a need for a lens element that would suppress, control or at least slow down progression of abnormal refractions of the eye such as myopia or hyperopia.

WO2019206569 in the name of the applicant proposes solutions by disclosing lens elements having optical elements which show in particular a function of non-focusing an image on the retina of the eye in standard wearing conditions.

WO2021/159170 is a document of the state of the art using for example axicons or light sword elements which also impact central vision.

WO2015/147758 is a document of the state of the art which is only related to contact lenses or an ocular lens which does not present any coating.

The present disclosure aims to improve even further such optical non-focusing functions by proposing specific optical elements enhancing myopia / hyperopia control.

### SUMMARY OF THE DISCLOSURE

In order to achieve this goal, the present disclosure proposes a spectacle lens element intended to be worn for vision improvement by a wearer comprising:
- a substrate forming a refraction area having a refractive power based on a prescription for said eye of the wearer; and
- a plurality of n optical elements having optical power, the plurality of n optical elements being located on at least part of the refraction area, at least one of the n optical elements having an optical function of not focusing an image on the retina of the eye of the wearer,
- a k^{th} optical element of the at least one of the n optical elements being located in a domain defined by a closed contour, k being a positive integer equal or greater than 2 and smaller or equal to n, the k^{th} optical element containing in its closed contour zones that are in recess and zones which are protruding from a base surface defined by the refraction area, wherein, without taking a potential coating layer into account, the k^{th} optical element presents as a standard deviation of sphere values ${σ}_{{D}_{k}}^{Sphere}$ of at least 0.4 dpt, where ${σ}_{{D}_{k}}^{Sphere}$ is defined as follows: ${σ}_{{D}_{k}}^{Sphere} = \sqrt{\frac{1}{{N}_{{D}_{k}}} {\sum }_{\left({x}_{i}, {y}_{i}\right) ∈ {D}_{k}} {\left(H\left({x}_{i}, {y}_{i}\right)-{\overline{H}}_{{D}_{k}}\right)}^{2}} \geq {σ}_{min}^{Sphere}$
   - *H(xᵢ, yᵢ)* being the mean optical curvature operator at position *xᵢ, yᵢ* of the k^{th} optical element in its domain,
   - *H_{Dk}* being the mean of the mean optical curvatures over the whole domain of the k^{th} optical element,
   - *N_{Dk}* being an integer of number all positions *xᵢ, yᵢ in the* domain of the k-th optical element and being greater than hundred.

The invention also relates to a method for conceiving a spectacle lens element for vision improvement intended to be worn by a wearer comprising:
- conceiving a substrate forming a refraction area having a refractive power based on a prescription for said eye of the wearer; and
- conceiving a plurality of n optical elements having optical power, the plurality of n optical elements being located on at least part of the refraction area, at least one of the n optical elements having an optical function of not focusing an image on the retina of the eye of the wearer, a k^{th} optical element of the at least one of the n optical elements being located in a domain defined by a closed contour, k being a positive integer equal or greater than 2 and smaller or equal to n, the k^{th} optical element containing, in its closed contour, zones that are in recess and zones which are protruding from a base surface defined by the refraction area,
   wherein, without taking a potential coating layer into account, the k^{th} optical element presents as a standard deviation of sphere values ${σ}_{{D}_{k}}^{Sphere}$ of at least 0.4 dpt, where ${σ}_{{D}_{k}}^{Sphere}$ is defined as follows: ${σ}_{{D}_{k}}^{Sphere} = \sqrt{\frac{1}{{N}_{{D}_{k}}} {\sum }_{\left({x}_{i}, {y}_{i}\right) ∈ {D}_{k}} {\left(H\left({x}_{i}, {y}_{i}\right)-{\overline{H}}_{{D}_{k}}\right)}^{2}} \geq {σ}_{min}^{Sphere}$
   - *H(xᵢ, yᵢ)* being the mean optical curvature operator at position *xᵢ, yᵢ* of the k^{th} optical element in its domain,
   - *H_{Dk}* being the mean of the mean optical curvatures over the whole domain of the k^{th} optical element,
   - *N_{Dk}* being an integer of number all positions *xᵢ, yᵢ in the* domain of the k-th optical element and being greater than hundred.

A clinical study showed that in particular non-spherical microlenses were even more beneficial for myopia control. More specifically, the trial showed that the concept with for example highly aspheric optical elements was more efficient at slowing down myopia evolution than elements with lower asphericity. Therefore, the present invention allows defining lens elements having optical elements showing in particular non-spherical features which are important enough to obtain enhanced results in terms of myopia or hyperopia control.

An optical element having the above mentioned features produces a non-spherical optical wave from a plane wave. In other words, a parallel beam of rays passing perpendicularly through the optical element may not produce a well-defined image point, regardless of the position of the observation plane.

According to further aspects taken alone or in combination relating to the above defined lens element or the above defined method:
At least the k^{th} optical element may be of non-spherical shape.
Said optical elements are for example structured in a network and configured such that the standard deviation of sphere values ${σ}_{{D}_{k}}^{Sphere}$ of an optical element which is closer to the peripheral part of the lens element is higher than that of an optical element which is more distant to the peripheral part of said lens element.
The absolute value of the mean optical power MOPₖ of the k^{th} optical element can be less than 0.25 dpt, preferably less than 0.12 dpt.
The k^{th} optical element presents for example a rotational symmetry.
The optical elements may be contiguous, at least for some of them.
The optical elements can be disposed according to a ring pattern.
The k^{th} optical element may be embedded in a substrate forming the refraction area.
The k^{th} optical element protrudes for example at least partly from the refraction area.
The standard deviation of sphere values ${σ}_{{D}_{k}}^{Sphere}$ may be of at least 1.3 dpt when taking into account a coating layer.

### BRIEF DESCRIPTION OF THE DRAWINGS

Other advantages and features will become apparent upon reading the description of the following figures, among which:
- figure 1 is a plan view of a lens element according to an embodiment of the disclosure;
- figure 2 is a general profile view of a lens element according to an embodiment of the disclosure;
- figure 3 shows as an example a partial top view of discrete wavelet transform with Haar wavelets of a lens element with optical elements,
- figure 4 is an exemplary cross sectional view along for example the x-axis of a lens element with optical elements,
- figure 5 presents a projection of the z-profile of figure 4 of the optical elements in a plane,
- figure 6 is a similar cross sectional view as in figure 5 where a best sphere approach is applied to approach the shape of each individual optical element,
- figure 7 shows a top view of an example for an optical element 14-k where its contour and thus the relevant domain has been determined,
- figure 8 and 9 present two further embodiments of an optical element in a similar view as the one of figure 7,
- figure 10 shows in a cross sectional view a further example of a lens element with an embedded optical element,
- figure 11 shows in two graphs respectively the curvature and the optical power in function of the radius of a lens element,
- figure 12 shows in a graph the mean optical curvature in function of the radius of a lens element.

### DETAILED DESCRIPTION

On all the figures, the same elements bear the same reference numbers.

The following embodiments are only examples. Although the description refers to one or several embodiments, the invention is not limited to these embodiments. In addition, a feature described in relationship with one embodiment may also concern another embodiment even if this is not mentioned expressively. Simple features of different embodiments may also be combined to provide further realizations.

In the present description, by "front" or "rear" face of a layer or a lens element or surface, reference is made to the propagation of the rays of light towards the eye through the ophthalmic lens when an ophthalmic device bearing the ophthalmic lens is worn on a wearer's face. Thus a "front" face is always that which is farest away to the eye of the user and therefore closest to the field of view and a "rear" face is always that which is closest to the eye of the user.

The disclosure relates to a lens element intended to be worn in front of an eye of a wearer.

In the context of the present disclosure, the term "lens element" can refer to a lens blank, an uncut optical lens, a spectacle optical lens edged to fit a specific spectacle frame, an ophthalmic lens or a contact lens.

In the context of the present disclosure, an optical element is considered as an optical microstructure having physical extension Z (deformation/height) between in particular [0,1µm-50µm], and a physical extension X/Y (width/length /diameter) between [0.5µm ,2.5mm].

Such optical elements provide an optical wavefront modification on its intensity, curvature, or light deviation.

The optical element may be located on top of a substrate but may also be embedded in such a substrate. For example when the substrate comprises several layers, the optical element can be part of a specific optical layer.

A hard coat layer may protect the lens element and cover the optical elements and the refraction area.

The optical elements can be absorptive or not. In case they are absorptive, they may be absorptive locally up to 100%.

The optical elements can also be configured to scatter or diffract light, in particular with a scattering or diffraction angle ranging from +/-1° to +/-30°.

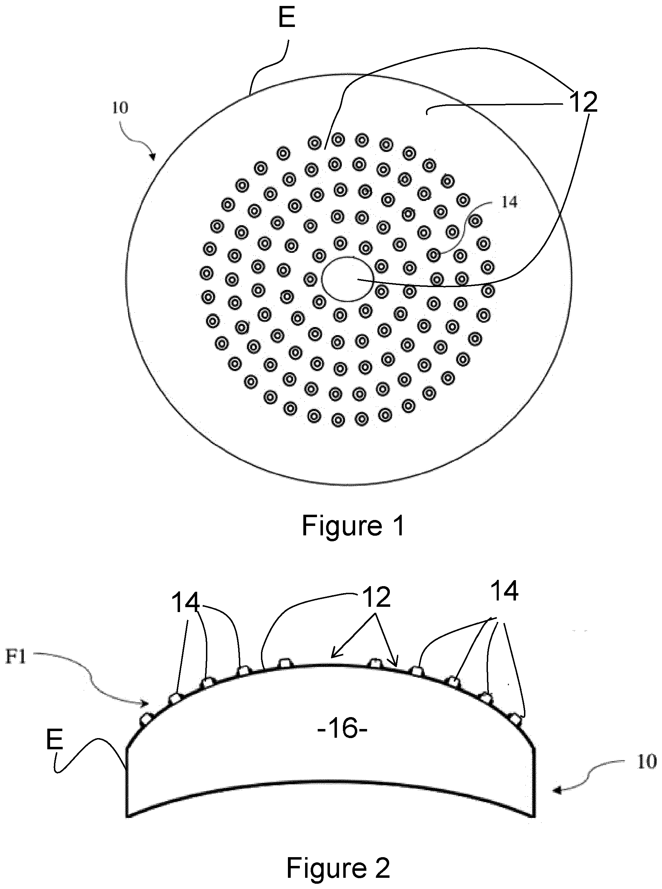

As represented on figures 1 and 2, a lens element 10 according to the disclosure comprises:
- a refraction area 12, and
- a plurality of optical elements 14 located for example on at least part of the refraction area 12.

In these figures, the lens element 10 comprises a substrate 16 and the refraction area 12 and the optical elements 14 form the front face F1 which is the interface with the surrounding air.

In other embodiments the optical elements 14 may be embedded in a layer of a multilayer substrate, for example when the substrate comprises several layers. The optical element can be part of a specific optical layer of the substrate 16.

The substrate 16 is for example made of a plastic material, for instance a polymer substrate like a thermoset, in particular made of poly(urea-urethane), or thermoplastic plastic material, in particular made of polyamide (PA), like nylon or a polycarbonate, or polyester.

The optical elements 14 may be made of the same material as the substrate 16 and have therefore the same refractive index.

In other examples, in particular when embedded, the optical elements 14 may be made with a different material having a refractive index different from the refractive material forming the substrate 16.

The optical elements 14 are for example in figure 1 and 2 protruding from the front face F1 and can be considered as a plurality of respectively independent island-shaped areas.

The refractive area 12 is preferably formed as the area other than the areas formed by the plurality of optical elements 14. In other words, the refractive area 12 is the complementary area to the areas occupied by the plurality of optical elements 14.

The refraction area 12 is configured to provide to the wearer in standard wearing conditions, in particular for foveal vision, a first optical power based on the prescription of the wearer for correcting an abnormal refraction of said eye of the wearer. The object of the refraction area 12 is to focus incoming parallel light on the retina.

The optical elements 14 aim to produce non-focalised light, for example in front of the retina and in particular in peripheral zones in order to slow down myopia.

The wearing conditions are to be understood as the position of the lens element with relation to the eye of a wearer, for example defined by a pantoscopic angle, a Cornea to lens distance, a Pupil-cornea distance, a center of rotation of the eye (CRE) to pupil distance, a CRE to lens distance and a wrap angle.

A lens element 10 as presented on figures 1 and 2 may be manufactured in various ways in particular by moulding and/ or machining and polishing a substrate 16 or a lens blank.

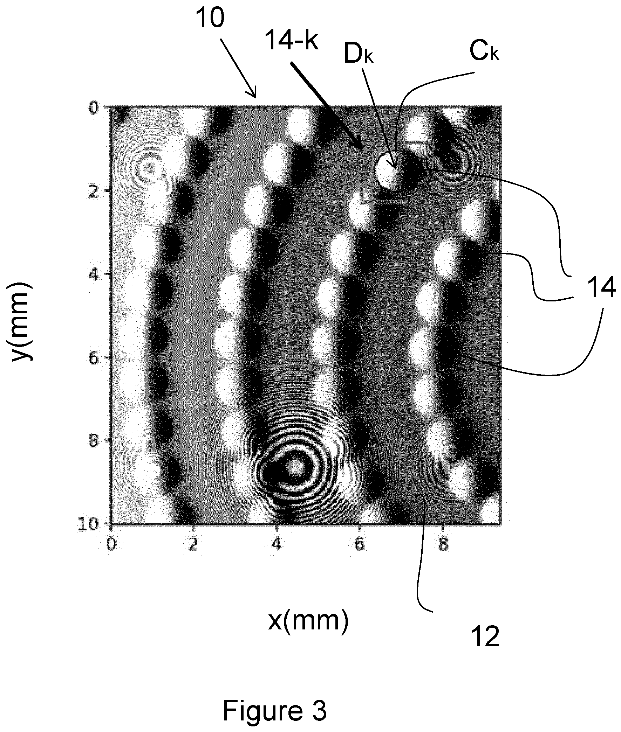

Figure 3 shows as an example a a partial top view of discrete wavelet transform with Haar wavelets of a lens element 10 with optical elements 14 disposed on top of a refraction area 12. In this example, the optical elements 14 are for example of the same material as the substrate building the refraction area 12. The optical elements 14 may also be of a different material and have a refractive index which is different from the refractive index of the substrate 16. An example with embedded optical elements 14 will be explained later on.

Let's assume that the lens element 10 comprises n optical elements 14-k, n being an integer and corresponds to the number of optical elements 14 of lens element 10 and k being an integer designating the k-th optical element 14.

In order to be able to specify the specific features and properties of an optical element 14-k, it is necessary to delimit its contour Cₖ. The contour Cₖ of optical element 14-k defines a domain Dₖ delimited by contour Cₖ. As will be specified beneath, the specific features and properties of an optical element 14-k can be determined within the domain Dₖ by calculating at different locations designated by (xᵢ, yᵢ) the mean optical curvature H(xᵢ, yᵢ) of the optical element 14-k, i being a natural integer. The optical curvature operator takes into account the curvature and the refraction index difference that exists at the interface of the optical element 14-k.

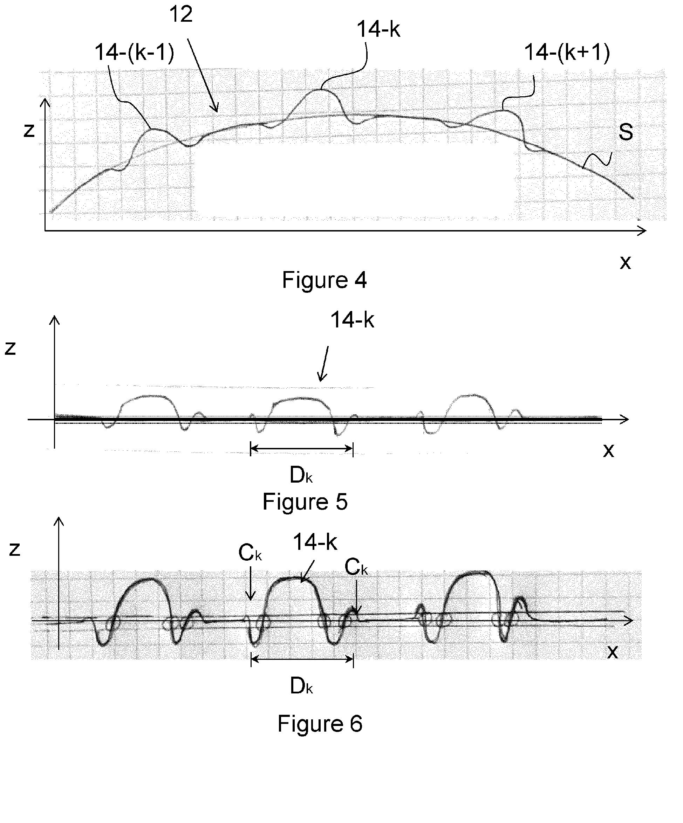

For delimiting the contour Cₖ and thus determine the domain Dₖ of an optical element 14-k for example, the surface of the refraction area 12 may be considered as a base-surface S which has to be subtracted from the z-profile according to x and y coordinates of the optical element 14-k. This is shown as an example in figure 4 which is an exemplary partial cross sectional view along for example the x-axis of a lens element 10.

In order to proceed like this, the lens element 10 is inspected to get a 3-D optical power profile.

This can be done by using for example an optical power mapping instrument as manufactured by NIMO (registered trademark) like TR1504. Such an instrument allows visualizing the distribution of optical power across a lens element 10 or part of a lens element 10.

When the optical elements 14 are on top of the lens element 10, it is also possible to dress a 3-D profile mechanically with a touch probe for example. The optical elements 14 may be protruding from the refraction area 12 or in recess from the refraction area 12, or being protruding and in recess for one optical element 14.

The surface S of the refraction area 12 is determined over the whole lens element 10, in particular calculated or extracted at the locations of the optical elements 14 with a best sphere approach and subtracted from the z-profile of the optical elements 14. This can in particular be done by calculating locally in meshed small sub-domains (for example a circular or polygone shaped sub-domains of 4mm extension/ diameter) the best local sphere. This local calculation approach is in particular interesting in the case where the refraction area 12 shows for example of aspheric or progressive properties. The best sphere is the sphere whose parameters, its centre and its radius, are optimized, as disclosed in chapter 6 of document http://www.sci.utah.edu/~balling/FEtools/doc_files/LeastSquaresFitting.pdf

This allows a projection of the z-profile of the optical elements 14 in a plane as shown as a cross sectional view in figure 5. Optical elements 14 typically have a width/length/diameter between [0.5µm ,2.5mm].

In case where the optical elements 14 protrude or are set back from surface S and having the same refractive index as the refractive area 12, the contour Cₖ and thus the relevant domain Dₖ of optical element 14-k can be determined by all points with for example |zᵢ(xᵢ, yᵢ)| ≥ ε. ε being a constant chosen in a range between for example between 0.05µm and 0.5µm, limits included and may be ε = 0.05µm or ε=0.5µm. In case of adjacent locations where there are locations with zᵢ(xᵢ, yᵢ) ≥ ε and zᵢ₊₁(xᵢ₊₁, yᵢ₊₁) ≤ - ε and $\sqrt{{\left({x}_{i}-{x}_{i + 1}\right)}^{2} + {\left({y}_{i}-{y}_{i + 1}\right)}^{2}} \leq ε$, those locations would also belong to the same domain Dᵢ and thus to the same optical element 14-k as shown in figure 6. In figures 5 and 6, the |zᵢ(xᵢ, yᵢ)| ≥ 0.05µm criteria is shown with dotted lines above and beneath z=0 / x-axis.

Figure 6 is a similar cross sectional view as in figure 5 where a best sphere approach is applied to approach the shape of each individual optical element 14. The standard deviation from this best sphere approach is a parameter that allows characterizing the non- spherical feature of an optical element 14.

In a more general approach which is equivalent to the above one and encloses it and which may also be applied to embedded optical elements 14, the contour Cₖ can be determined by a level of a differential optical path (DOP).

A difference in optical path length between two paths is called the optical path difference OPD. In the sense of the disclosure the first optical path difference is the difference in optical path length between light rays passing through the lens element and light rays passing through air.

In the sense of the present disclosure the following convention is applied: for spherical lens element 10 with positive optical power, the OPD is higher in its center than at the edge.

A first OPD can be considered and measured as a surface in 3D space and written (xᵢ, yᵢ, 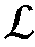 (xᵢ,yᵢ)).
with $L \left({x}_{i}, {y}_{i}\right) = \int Δ n \left({x}_{i}, {y}_{i}, z\right) dz$

One may then determine a second optical path difference OPD2 corresponding the best spherical local fitting of the optical element 14-k.

A differential optical path DOP being composed as the difference between said first optical path difference OPD1 and said second optical path difference OPD2 may be determined.

This corresponds in the above described specific case to subtracting the surface S of the refraction area 12 which is extrapolated at the locations of the optical elements 14 with a best sphere approach from the z-profile of the optical elements 14.

The contour Cₖ can then be determined by a level of said differential optical path (DOP), in particular in case the refractive index of the refractive area 12 and the lens element 14 would be 1.591, the differential level would be DOP < 0.02955µm.

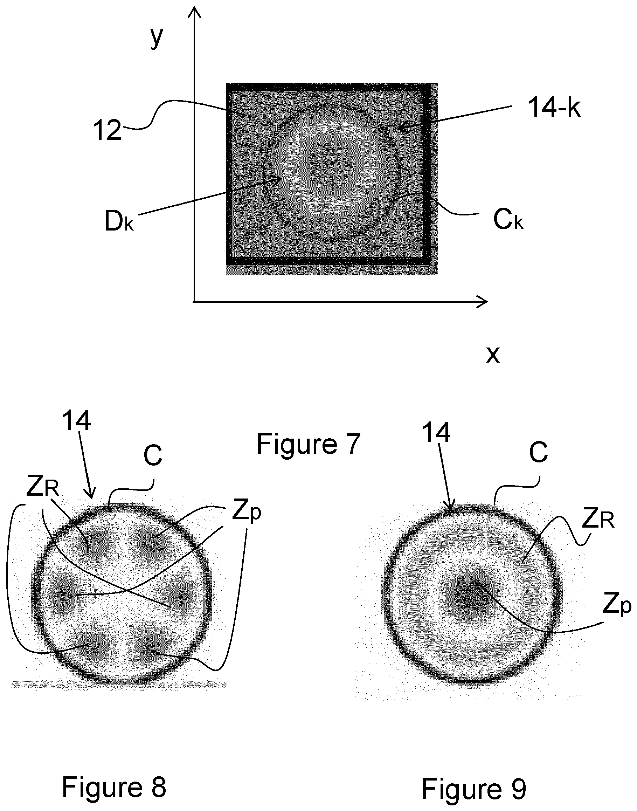

Figure 7 shows an example for an optical element 14-k where the contour Cₖ and thus the relevant domain Dₖ has been determined, the DOP values are represented in a grey scale.

At this stage, the features of the optical element 14-k can be determined as follows.

Let N_{Dk} being an integer of number all positions xᵢ, yᵢ in the domain Dₖ and being greater than 100. The positions xᵢ, yᵢ are generally uniformly distributed within the domain Dₖ.

Then the mean optical curvature operator *H(xᵢ, yᵢ)* is calculated for all N_{Dk} positions *xᵢ, yᵢ* of the k^{th} optical element in its domain Dₖ, which results in N_{Dk} values. An analytical surface is preferentially fitted to the point cloud (xᵢ,yᵢ,zᵢ) in order to calculate the curvatures allowing to get. The fitting process can be realized through a least-squares optimization, and would involve for instance aspheres, but more preferably freeform surfaces such as Zernike or Nurbs.

Furthermore, for the relevant domain Dₖ, the mean of the mean optical curvatures over the whole domain Dₖ of the k^{th} optical element designated by *H̅_{Dk}* is calculated.

The feature allowing characterization of the control ability of myopia and hyperopia is the standard deviation of the mean optical curvature operator from the best sphere approach without taking into account a potential coating layer that may cover the refraction area 12 and the optical elements 14.

At least one k^{th} optical element 14-k presents as a standard deviation of sphere values ${σ}_{{D}_{k}}^{Sphere}$ of at least 0.4 dpt ( ${σ}_{min}^{Sphere} = 0.4 dpt$), where ${σ}_{{D}_{k}}^{Sphere}$ is defined as follows: ${σ}_{{D}_{k}}^{Sphere} = \sqrt{\frac{1}{{N}_{{D}_{k}}} {\sum }_{\left({x}_{i}, {y}_{i}\right) ∈ {D}_{k}} {\left(H\left({x}_{i}, {y}_{i}\right)-{\overline{H}}_{{D}_{k}}\right)}^{2}} \geq {σ}_{min}^{Sphere} .$

With this feature, an optical element 14-k delivers non-focusing light rays on the retina in a more efficient way, reducing therefore any deformation tendency of the retina.

**In** addition, it may be interesting that the least one k^{th} optical element 14-k presents a standard deviation of sphere values ${σ}_{{D}_{k}}^{Sphere}$ of at most 20 dpt. This upper limit can prevent disturbance of the central vision of the wearer.

Furthermore, the k^{th} optical element may be of non-spherical shape.

As shown for example in figure 1, the optical elements 14 may be structured in a network.

**In** this case, improved efficiency in myopia and hyperopia control can be reached when the standard deviation of sphere values ${σ}_{{D}_{k}}^{Sphere}$ of an optical element 14 which is closer to the peripheral part or edge E (see figures 1 and 2) of the lens element 10 is higher than that of an optical element 14 which is more distant to the peripheral part of said lens element. In other words standard deviation of sphere values ${σ}_{{D}_{k}}^{Sphere}$ of the optical elements 14 increase outwards in direction to the edges of the lens element 10.

Furthermore, in some cases, optical elements 14 may provide a supplemental optical power to the lens element 10 under certain conditions.

However, a quite interesting effect of myopia and hyperopia control could be observed when the absolute value of the mean optical power MOPₖ (MOPₖ =|*H̅_{Dk}*|) of the kth optical element 14-k is less than 0.25 dpt, preferably less than 0.12 dpt. As explained above, for calculating the mean optical curvatures in the domain defined by one optical element 14-k for example, the underlying base surface S of the refraction area 12 has to be locally subtracted.

In this case where MOPₖ is quite small or even zero, the kth optical element 14-k has positive and negative optical power zones which are counterbalancing each other and only very few or nearly no supplemental optical power is provided by the optical element 14-k to the lens element 10 while myopia and hyperopia control can still be achieved efficiently.

As an example, figure 8 shows a similar view of an optical element 14 as shown in figure 7. In this configuration, the optical element 14 contains in its contour C zones Z_{R} that are in recess and zones Z_{P} which are protruding from the base surface S defined by the refraction area 12. Zones Z_{R} and zones Z_{P} may be of a general shape of recess / protruding alternating angular sectors. In this case, an optimised defocusing function can be obtained while the optical element 14 has a zero mean optical power, in addition also zero cylinder power and no prism.

Functions that allow to define the diopter interface of the optical elements 14 with zero mean optical power are for example Zernike functions, where n> 2: ${Z}_{n}^{m} \left(ρ, φ\right) = {R}_{n}^{m} \left(ρ\right) cos \left(m φ\right)$ ${Z}_{n}^{- m} \left(ρ, φ\right) = {R}_{n}^{m} \left(ρ\right) sin \left(m φ\right) ,$ ${R}_{n}^{m} \left(ρ\right) = {\sum }_{k = 0}^{\frac{n - m}{2}} \frac{{\left(-1\right)}^{k} \left(n-k\right) !}{k ! \left(\frac{n + m}{2}-k\right) ! \left(\frac{n - m}{2}-k\right) !} {ρ}^{n - 2 k}$

According to a further development, the optical element 14 may present a rotational symmetry like shown in figure 9.

Figure 9 is a figure similar to figure 8 and the diopter interface of the optical element 14 is also defined by a Zernike function.

In this case, within the contour C of the optical element 14, the latter presents a ring shaped zone Z_{R} in recess and a central circular zone Z_{P} which is protruding from the base surface S defined by the refraction area 12.

In other developments, the optical elements 14 may be contiguous, meaning that the respective contours are touching (see for example figure 3).

To this respect and as a fact of general matter, one should bear in mind that the contour C of the optical elements does not need to be circular, but can be of any shape, like a random shape, a polygonal shape, a honey comb shape etc. In addition, the contour C does not need to be the same for all optical elements 14, but may differ between two optical elements.

The optical elements 14 may be disposed in a network structure and in particular being disposed according to a ring pattern as shown in figures 1 and 3.

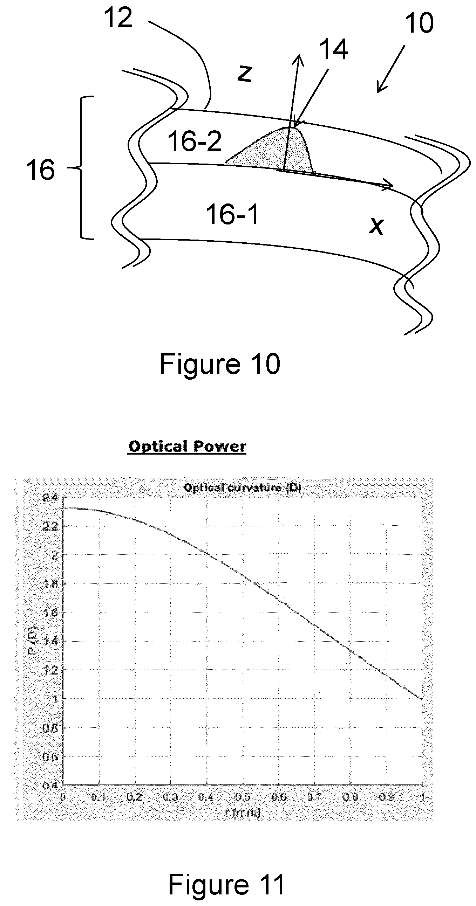

Figure 10 shows in a cross sectional view a part of a lens element 10 having a substrate 16 comprising a first layer 16-1 and a second layer 16-2.

In this specific example, the optical element 14 is embedded in the substrate 16, in particular in layer 16-2, the substrate 16 forming the refraction area 12 at the interface with the surrounding air. In this case, the optical element 14 has for example a refraction index which is different from the refraction index of surrounding layer 16-2 and from the underlying first layer 16-1.

In the here disclosed embedded case, it is not possible to measure the diopter interface of the optical elements 14 in a mechanical way, but features characterising the optical elements 14 as set out above can still be achieved by using for example an optical power mapping instrument as manufactured by NIMO (registered trademark) like TR1504.

Indeed, the optical power mapping instrument allows measuring the phase Ψ and thus the first OPD [Ψ = (2π/λ) * OPD, λ being the measuring wavelength of the optical power mapping instrument, typically λ = 546nm] as a surface in 3D space and written (xᵢ, yᵢ, 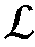 (xᵢ,yᵢ)). One may then apply the same reasoning as with the physical surface S and apply the above described contour determination as well.

The optical elements 14 can be qualified either refractive or diffractive (in particular π -Fresnel).

π -Fresnel optical elements 14 have discontinuities such as a discontinuous surface and/or a refractive index profile with discontinuities. A diffractive optical element 14 has a phase function 'ψ'(r) with π-phase jumps at a nominal wavelength.

Despite the discontinuities, the above considerations on calculation on the mean optical curvature are still applicable; the only point is that the locations xᵢ/yᵢ shall not be chosen at the location of the discontinuities for determination of mean curvatures.

More in detail, a diffractive surface such as presenting π -Fresnel optical elements 14, can be described mathematically as follows: $z = f \left(x, y\right) modulo M$ where
- f(x,y) is a continuous function and M is the step height.
- $M = j \frac{λ}{Δ n}$; j being a natural number, *λ* being the wavelength and Δ*n* being the difference of the refraction index of the π -Fresnel optical elements 14 and air.

The optical path difference (OPD) produced by an optical element 14-k is given by: $\begin{matrix}OPD \left(x, y\right) & = Δ n ∗ z \\ & = Δ n ∗ f \left(x, y\right) modulo \left(Δn∗M\right) \\ & = Δ n ∗ f \left(x, y\right) modulo \left(j∗λ\right)\end{matrix}$ and the phase difference by $\begin{matrix}ψ \left(x, y\right) & = \frac{2 π}{λ} ∗ OPD \left(x, y\right) \\ & = \frac{2 π}{λ} Δ n ∗ f \left(x, y\right) modulo \left(\frac{2 π}{λ}Δn∗M\right) \\ & = \frac{2 π}{λ} Δ n ∗ f \left(x, y\right) modulo \left(2 πj\right)\end{matrix}$

A already disclosed above, the first OPD is measured and can be represented as a surface in 3D space and written (xᵢ, yᵢ, 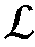 (xᵢ,yᵢ)).

Then the second optical path difference OPD2 corresponding the best spherical local fitting of the optical element 14-k is determined.

In this case the best spherical local fitting takes in account a modulo function. The fitting parameters, in particular the modulo and the step height M can be optimized with a least-squares process.

A differential optical path DOP being composed as the difference between said first optical path difference OPD1 and said second optical path difference OPD2 may be determined then allowing to determine as disclosed above a contour Cₖ for an optical element 14-k.

Figure 11 shows an example of a rotation symmetric optical element 14-k having at its diopter interface a difference of refraction index Δn= 0.591.

Figure 11 shows in particular a graph of the optical power (in dpt) of the optical element 14-k in function of the radius.

In this example the standard deviation of sphere values ${σ}_{{D}_{k}}^{Sphere} = 0.41$ and the mean optical power MOPₖ = 1.55dpt.

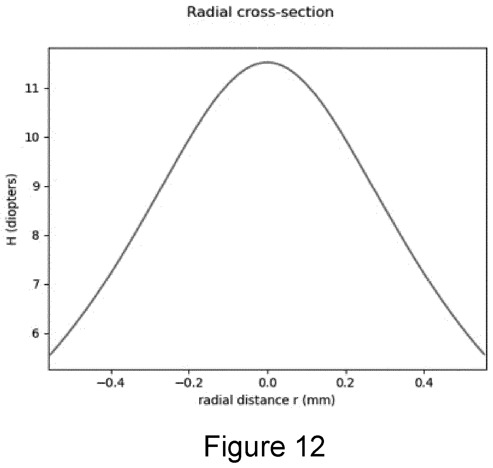

Figure 12 shows a graph of an example of a highly aspheric optical element 14. The mean optical curvature is displayed in function of the radial distance. The optical element 14 here shown presents a rotational symmetry.

In this case, the front surface radius is 167.81mm and the difference of refraction index is ⊗n= 0.591 at the diopter interface. The asphere center radius is 51.30mm (k1 = -10603.77mm⁻¹). The mean optical power is 7.66 diopter and standard deviation of sphere values ${σ}_{{D}_{k}}^{Sphere} = 1.64$ diopter.

The above disclosure related to non-coated lens elements 10 having a refraction area 12 and optical elements 14.

In case of coating, in particular a hard coat, the standard deviation of sphere values ${σ}_{{D}_{k}}^{Sphere}$ shall be of at least 1.3 dpt.

The present disclosure shows clearly that optical elements 14 having in particular enhanced non-spherical properties are well suited for myopia and hyperopia control / slow down.

## Claims

1. A spectacle lens element (10) intended to be worn by a wearer comprising:
- a substrate (16) forming a refraction area (12) having a refractive power based on a prescription for said eye of the wearer; and
- a plurality of n optical elements (14) having optical power, the plurality of n optical elements (14) being located on at least part of the refraction area (12), at least one of the n optical elements (14) having an optical function of not focusing an image on the retina of the eye of the wearer,
- a k^{th} optical element (14-k) of the at least one of the n optical elements (14) being located in a domain (Dₖ) defined by a closed contour (Cₖ), k being a positive integer equal or greater than 2 and smaller or equal to n, the k^{th} optical element (14-k) containing, in its closed contour (Cₖ), zones (Z_{R}) that are in recess and zones (Z_{P}) which are protruding from a base surface (S) defined by the refraction area (12),
wherein, without taking a potential coating layer into account, the k^{th} optical element (14-k) presents as a standard deviation of sphere values ${σ}_{{D}_{k}}^{Sphere}$ of at least 0.4 dpt, where ${σ}_{{D}_{k}}^{Sphere}$ is defined as follows: ${σ}_{{D}_{k}}^{Sphere} = \sqrt{\frac{1}{{N}_{{D}_{k}}} {\sum }_{\left({x}_{i}, {y}_{i}\right) ∈ {D}_{k}} {\left(H\left({x}_{i}, {y}_{i}\right)-{\overline{H}}_{{D}_{k}}\right)}^{2}} \geq {σ}_{min}^{Sphere}$
- *H*(*xᵢ, yᵢ*) being the mean optical curvature operator at position *xᵢ, yᵢ* of the k^{th} optical element (14-k) in its domain (Dₖ),
- *H̅_{Dk}* being the mean of the mean optical curvatures over the whole domain (*Dₖ*) of the k^{th} optical element (14-k),
- *N_{Dk}* being an integer of number all positions *xᵢ, yᵢ* in the domain (*Dₖ*) of the k^{th} optical element (14-k) and being greater than 100.

2. Lens element according to claim 1, the k^{th} optical element (14-k) presents a standard deviation of sphere values ${σ}_{{D}_{k}}^{Sphere}$ of at most 20 dpt.

3. Lens element according to claim 1 or 2, wherein the k^{th} optical element (14-k) is of non-spherical shape.

4. Lens element according to any of claims 1-3, wherein said optical elements (14) are structured in a network and configured such that the standard deviation of sphere values ${σ}_{{D}_{k}}^{Sphere}$ of an optical element (14) which is closer to the peripheral part of the lens element (10) is higher than that of an optical element (14) which is more distant to the peripheral part of said lens element (10).

5. Lens element according to any of claims 1 to 4, wherein the absolute value of the mean optical power MOPₖ of the k^{th} optical element (14-k) is less than 0.25 dpt, preferably less than 0.12 dpt.

6. Lens element according to claim 5, wherein the k^{th} optical element (14-k) has positive and negative optical power zones which are counterbalancing each other.

7. Lens element according to any of claims 1 to 6, wherein the k^{th} optical element (14-k) presents a rotational symmetry.

8. Lens element according to any of claims 1 to 7, wherein the optical elements (14) are contiguous.

9. Lens element according to any of claims 1 to 8, wherein the optical elements (14) are disposed according to a ring pattern.

10. Lens element according to any of claims 1 to 9, wherein the k^{th} optical element (14-k) is embedded in a substrate (16) forming the refraction area (12).

11. Lens element according to any of claims 1 to 9, wherein the k^{th} optical element (14-k) protrudes at least partly from the refraction area (12).

12. Lens element according to claim 11, wherein the standard deviation of sphere values ${σ}_{{D}_{k}}^{Sphere}$ is of at least 1.3 dpt when taking into account a coating layer.

13. Method for conceiving a spectacle lens element intended to be worn by a wearer comprising:
- conceiving a substrate (16) forming a refraction area (12) having a refractive power based on a prescription for said eye of the wearer; and
- conceiving a plurality of n optical elements (14) having optical power, the plurality of n optical elements (14) being located on at least part of the refraction area (12), at least one of the n optical elements (14) having an optical function of not focusing an image on the retina of the eye of the wearer, a k^{th} optical element (14-k) of the at least one of the n optical elements (14) being located in a domain (*Dₖ*) defined by a closed contour (*Cₖ*), k being a positive integer equal or greater than 2 and smaller or equal to n, the k^{th} optical element (14-k) containing, in its closed contour (Cₖ), zones (Z_{R}) that are in recess and zones (Z_{P}) which are protruding from a base surface (S) defined by the refraction area (12),
wherein, without taking a potential coating layer into account, the k^{th} optical element (14-k) is conceived to present as a standard deviation of sphere values ${σ}_{{D}_{k}}^{Sphere}$ of at least 0.4 dpt, where ${σ}_{{D}_{k}}^{Sphere}$ is defined as follows: ${σ}_{{D}_{k}}^{Sphere} = \sqrt{\frac{1}{{N}_{{D}_{k}}} {\sum }_{\left({x}_{i}, {y}_{i}\right) ∈ {D}_{k}} {\left(H\left({x}_{i}, {y}_{i}\right)-{\overline{H}}_{{D}_{k}}\right)}^{2}} \geq {σ}_{min}^{Sphere}$
- *H*(*xᵢ, yᵢ*) being the mean optical curvature operator at position *xᵢ, yᵢ* of the k^{th} optical element (14-k) in its domain (Dₖ),
- *H̅_{Dk}* being the mean of the mean optical curvatures over the whole domain (*Dₖ*) of the k^{th} optical element (14-k),
- *N_{Dk}* being an integer of number all positions *xᵢ, yᵢ* in the domain (*Dₖ*) of the k^{th} optical element (14-k) and being greater than 100.

14. Method according to claim 13 wherein the k^{th} optical element (14-k) is conceived to present a standard deviation of sphere values ${σ}_{{D}_{k}}^{Sphere}$ of at most 20 dpt.

15. Method according to claim 13 or 14, wherein the k^{th} optical element (14-k) is conceived of non-spherical shape.

## Patentansprüche

1. Brillenlinsenelement (10), das von einem Träger getragen werden soll, umfassend:
- ein Substrat (16), das einen Brechungsbereich (12) mit einer Brechkraft auf der Grundlage einer Verschreibung für das Auge des Trägers bildet;
- eine Vielzahl von n optischen Elementen (14) mit optischer Stärke, wobei die Vielzahl von n optischen Elementen (14) auf wenigstens einem Teil des Brechungsbereichs (12) angeordnet sind, wobei wenigstens eines der n optischen Elemente (14) eine optische Funktion aufweist, ein Bild nicht auf die Netzhaut des Auges des Trägers zu fokussieren,
- wobei ein k-tes optisches Element (14-k) des wenigstens einen der n optischen Elemente (14) in einer Domäne (Dₖ) angeordnet ist, die durch eine geschlossene Kontur (Cₖ) definiert ist, wobei k eine positive ganze Zahl gleich oder größer als 2 und kleiner als oder gleich n ist, wobei das k-te optische Element (14-k) in seiner geschlossenen Kontur (Cₖ) Zonen (Z_{R}) enthält, die von einer durch den Brechungsbereich (12) definierten Basisoberfläche (S) vertieft sind, und Zonen (Z_{P}), die davon vorstehen,
wobei ohne Berücksichtigung einer potenziellen Beschichtungsschicht das k-te optische Element (14-k) als eine Standardabweichung von Kugelwerten ${σ}_{{D}_{k}}^{Kugel}$ von wenigstens 0,4 dpt vorliegt, wobei ${σ}_{{D}_{k}}^{Kugel}$ wie folgt definiert ist: ${σ}_{{D}_{k}}^{Kugel} = \sqrt{\frac{1}{{N}_{{D}_{k}}} {\sum }_{\left({x}_{i}, {y}_{i}\right) ∈ {D}_{k}} {\left(H\left({x}_{i}, {y}_{i}\right)-{\overline{H}}_{{D}_{k}}\right)}^{2}} \geq {σ}_{min}^{Kugel}$
- H(xᵢ, yᵢ) der mittlere optische Krümmungsoperator an Position xᵢ, yᵢ des k-ten optischen Elements (14-k) in seiner Domäne (Dₖ) ist,
- H̅_{Dk}der Mittelwert der mittleren optischen Krümmungen über die gesamte Domäne (Dₖ) des k-ten optischen Elements (14-k) ist,
- N_{Dk} eine ganze Zahl mit der Anzahl aller Positionen xᵢ, yᵢ in der Domäne (Dₖ) des k-ten optischen Elements (14-k) ist und größer als 100 ist.

2. Linsenelement nach Anspruch 1, wobei das k-te optische Element (14-k) eine Standardabweichung von sphärischen Werten ${σ}_{{D}_{k}}^{Kugel}$ von höchstens 20 dpt aufweist.

3. Linsenelement nach Anspruch 1 oder 2, wobei das k-te optische Element (14-k) eine nichtsphärische Form aufweist.

4. Linsenelement nach einem der Ansprüche 1-3, wobei die optischen Elemente (14) in einem Netzwerk strukturiert sind und so gestaltet sind, dass die Standardabweichung von sphärischen Werten ${σ}_{{D}_{k}}^{Kugel}$ eines optischen Elements (14), das näher an dem Umfangsbereich des Linsenelements (10) liegt, höher ist als jene eines optischen Elements (14), das weiter von dem Umfangsbereich des Linsenelements (10) entfernt liegt.

5. Linsenelement nach einem der Ansprüche 1 bis 4, wobei der Absolutwert der mittleren optischen Kraft MOPₖ des k-ten optischen Elements (14-k) weniger als 0,25 dpt, vorzugsweise weniger als 0,12 dpt, beträgt.

6. Linsenelement nach Anspruch 5, wobei das k-te optische Element (14-k) Zonen mit positiver und mit negativer optischer Kraft aufweist, die sich gegenseitig ausgleichen.

7. Linsenelement nach einem der Ansprüche 1 bis 6, wobei das k-te optische Element (14-k) eine Rotationssymmetrie darstellt.

8. Linsenelement nach einem der Ansprüche 1 bis 7, wobei die optischen Elemente (14) zusammenhängend sind.

9. Linsenelement nach einem der Ansprüche 1 bis 8, wobei die optischen Elemente (14) gemäß einem Ringmuster angeordnet sind.

10. Linsenelement nach einem der Ansprüche 1 bis 9, wobei das k-te optische Element (14-k) in ein Substrat (16) eingebettet ist, das den Brechungsbereich (12) bildet.

11. Linsenelement nach einem der Ansprüche 1 bis 9, wobei das k-te optische Element (14-k) wenigstens teilweise aus dem Brechungsbereich (12) vorsteht.

12. Linsenelement nach Anspruch 11, wobei die Standardabweichung von sphärischen Werten ${σ}_{{D}_{k}}^{Kugel}$ unter Berücksichtigung einer Beschichtungsschicht wenigstens 1,3 dpt beträgt.

13. Verfahren zum Konzipieren eines Brillenlinsenelements, das von einem Träger getragen werden soll, umfassend:
- Konzipieren eines Substrats (16), das einen Brechungsbereich (12) mit einer Brechkraft auf der Grundlage einer Verschreibung für das Auge des Trägers bildet; und
- Konzipieren einer Vielzahl von n optischen Elementen (14) mit optischer Stärke, wobei die Vielzahl von n optischen Elementen (14) auf wenigstens einem Teil des Brechungsbereichs (12) angeordnet ist, wobei wenigstens eines der n optischen Elemente (14) eine optische Funktion aufweist, ein Bild nicht auf die Netzhaut des Auges des Trägers zu fokussieren, wobei ein k-tes optisches Element (14-k) des wenigstens einen der n optischen Elemente (14) in einer Domäne (Dₖ) angeordnet ist, die durch eine geschlossene Kontur (Cₖ) definiert ist, wobei k eine positive ganze Zahl gleich oder größer als 2 und kleiner als oder gleich n ist, wobei das k-te optische Element (14-k) in seiner geschlossenen Kontur (Cₖ) Zonen (Z_{R}) enthält, von einer durch den Brechungsbereich (12) definierte Basisoberfläche (S) vertieft sind, und Zonen (Z_{P}), die davon vorstehen,
wobei ohne Berücksichtigung einer potenziellen Beschichtungsschicht das k-te optische Element (14-k) so konzipiert wird, dass es als eine Standardabweichung von sphärischen Werten ${σ}_{{D}_{k}}^{Kugel}$ von wenigstens 0,4 dpt vorliegt, wobei ${σ}_{{D}_{k}}^{Kugel}$ wie folgt definiert ist: ${σ}_{{D}_{k}}^{Kugel} = \sqrt{\frac{1}{{N}_{{D}_{k}}} {{\sum }_{\left({x}_{i}, {y}_{i}\right) ∈ {D}_{k}} \left(H\left({x}_{i}, {y}_{i}\right)-{\overline{H}}_{{D}_{k}}\right)}^{2}} \geq {σ}_{min}^{Kugel}$
- H(xᵢ, yᵢ) der mittlere optische Krümmungsoperator an Position xᵢ, yᵢ des k-ten optischen Elements (14-k) in seiner Domäne (Dₖ) ist,
- H̅_{Dk} der Mittelwert der mittleren optischen Krümmungen über die gesamte Domäne (Dₖ) des k-ten optischen Elements (14-k) ist,
- N_{Dk} eine ganze Zahl mit der Anzahl aller Positionen xᵢ, yᵢ in der Domäne (Dₖ) des k-ten optischen Elements (14-k) ist und größer als 100 ist.

14. Verfahren nach Anspruch 13, wobei das k-te optische Element (14-k) so konzipiert wird, dass es eine Standardabweichung von sphärischen Werten ${σ}_{{D}_{k}}^{Kugel}$ von höchstens 20 dpt darstellt.

15. Verfahren nach Anspruch 13 oder 14, wobei das k-te optische Element (14-k) mit nichtsphärischer Form konzipiert wird.

## Revendications

1. Élément formant verre de lunettes (10) destiné à être porté par un utilisateur comprenant :
- un substrat (16) formant une aire de réfraction (12) ayant une puissance de réfraction fondée sur une prescription pour ledit œil de l'utilisateur ; et
- une pluralité de n éléments optiques (14) ayant une puissance optique, la pluralité de n éléments optiques (14) étant située sur au moins une partie de l'aire de réfraction (12), au moins un des n éléments optiques (14) ayant une fonction optique de non-focalisation d'une image sur la rétine de l'œil de l'utilisateur,
- un k^{ième} élément optique (14-k) de l'au moins un des n éléments optiques (14) étant situé dans un domaine (Dₖ) défini par un contour fermé (Cₖ), k étant un nombre entier positif égal ou supérieur à 2 et inférieur ou égal à n, le k^{ième} élément optique (14-k) contenant, dans son contour fermé (Cₖ), des zones (Z_{R}) qui sont en creux et des zones (Z_{P}) qui dépassent d'une surface de base (S) définie par l'aire de réfraction 12,
dans lequel, sans tenir compte d'une potentielle couche de revêtement, le k^{ième} élément optique (14-k) présente un écart type de valeurs sphériques ${σ}_{{D}_{k}}^{Sphere}$ d'au moins 0,4 dpt, où ${σ}_{{D}_{k}}^{Sphere}$ est défini comme suit : ${σ}_{{D}_{k}}^{Sphere} = \sqrt{\frac{1}{{N}_{{D}_{k}}} {{\sum }_{\left({x}_{i}, {y}_{i}\right) ∈ {D}_{k}} \left(H\left({x}_{i}, {y}_{i}\right)-{\overline{H}}_{{D}_{k}}\right)}^{2}} \geq {σ}_{min}^{Sphere}$
- H(xᵢ,yᵢ) étant l'opérateur de courbure optique moyenne à la position xᵢ, yᵢ du k^{ième} élément optique (14-k) dans son domaine (Dₖ),
- H̅_{Dk}étant la moyenne des courbures optiques moyennes sur tout le domaine (Dₖ) du k^{ième} élément optique (14-k),
- N_{Dk} étant un nombre entier à toutes les positions xᵢ, yᵢ dans le domaine (Dₖ) du k^{ième} élément optique (14-k) et étant supérieur à 100.

2. Élément formant verre selon la revendication 1, le k^{ième} élément optique (14-k) présente un écart type de valeurs sphériques ${σ}_{{D}_{k}}^{Sphere}$ d'au plus 20 dpt.

3. Élément formant verre selon la revendication 1 ou 2, dans lequel le k^{ième} élément optique (14-k) est de forme non sphérique.

4. Élément formant verre selon l'une quelconque des revendications 1 à 3, dans lequel lesdits éléments optiques (14) sont structurés en réseau et configurés de telle sorte que l'écart type de valeurs sphériques ${σ}_{{D}_{k}}^{Sphere}$ d'un élément optique (14) qui est plus proche de la partie périphérique de l'élément formant verre (10) soit plus élevé que celui d'un élément optique (14) qui est plus éloigné de la partie périphérique dudit élément formant verre (10).

5. Élément formant verre selon l'une quelconque des revendications 1 à 4, dans lequel la valeur absolue de la puissance optique moyenne MOPₖ du k^{ième} élément optique (14-k) est inférieure à 0,25 dpt, de préférence inférieure à 0,12 dpt.

6. Élément formant verre selon la revendication 5, dans lequel le k^{ième} élément optique (14-k) a des zones de puissance optique positive et négative qui se compensent l'une l'autre.

7. Élément formant verre selon l'une quelconque des revendications 1 à 6, dans lequel le k^{ième} élément optique (14-k) présente une symétrie de rotation.

8. Élément formant verre selon l'une quelconque des revendications 1 à 7, dans lequel les éléments optiques (14) sont contigus.

9. Élément formant verre selon l'une quelconque des revendications 1 à 8, dans lequel les éléments optiques (14) sont disposés selon un motif en anneau.

10. Élément formant verre selon l'une quelconque des revendications 1 à 9, dans lequel le k^{ième} élément optique (14-k) est noyé dans un substrat (16) formant l'aire de réfraction (12).

11. Élément formant verre selon l'une quelconque des revendications 1 à 9, dans lequel le k^{ième} élément optique (14-k) dépasse au moins partiellement de l'aire de réfraction (12).

12. Élément formant verre selon la revendication 11, dans lequel l'écart type de valeurs sphériques ${σ}_{{D}_{k}}^{Sphere}$ est d'au moins 1,3 dpt en prenant en compte une couche de revêtement.

13. Procédé de conception d'un élément formant verre de lunettes destiné à être porté par un utilisateur comprenant :
- la conception d'un substrat (16) formant une aire de réfraction (12) ayant une puissance de réfraction fondée sur une prescription pour ledit œil de l'utilisateur ; et
- la conception d'une pluralité de n éléments optiques (14) ayant une puissance optique, la pluralité de n éléments optiques (14) étant située sur au moins une partie de l'aire de réfraction (12), au moins un des n éléments optiques (14) ayant une fonction optique de non-focalisation d'une image sur la rétine de l'œil de l'utilisateur, un k^{ième} élément optique (14-k) de l'au moins un des n éléments optiques (14) étant situé dans un domaine (Dₖ) défini par un contour fermé (Cₖ), k étant un nombre entier positif égal ou supérieur à 2 et inférieur ou égal à n, le k^{ième} élément optique (14-k) contenant, dans son contour fermé (Cₖ), des zones (Z_{R}) qui sont en creux et des zones (Z_{P}) qui dépassent d'une surface de base (S) définie par l'aire de réfraction (12),
dans lequel, sans tenir compte d'une potentielle couche de revêtement, le k^{ième} élément optique (14-k) est conçu pour présenter un écart type de valeurs sphériques ${σ}_{{D}_{k}}^{Sphere}$ d'au moins 0,4 dpt, où ${σ}_{{D}_{k}}^{Sphere}$ est défini comme suit : ${σ}_{{D}_{k}}^{Sphere} = \sqrt{\frac{1}{{N}_{{D}_{k}}} {{\sum }_{\left({x}_{i}{, y}_{i}\right) ∈ {D}_{k}} \left(H\left({x}_{i}{, y}_{i}\right)-{\overline{H}}_{{D}_{k}}\right)}^{2}} \geq {σ}_{min}^{Sphere}$
- H(xᵢ,yᵢ) étant l'opérateur de courbure optique moyenne à la position xᵢ, yᵢ du k^{ième} élément optique (14-k) dans son domaine (Dₖ),
- H̅_{Dk} étant la moyenne des courbures optiques moyennes sur tout le domaine (Dₖ) du k^{ième} élément optique (14-k),
- N_{Dk} étant un nombre entier à toutes les positions xᵢ, yᵢ dans le domaine (Dₖ) du k^{ième} élément optique (14-k) et étant supérieur à 100.

14. Procédé selon la revendication 13 dans lequel le k^{ième} élément optique (14-k) est conçu pour présenter un écart type de valeurs sphériques ${σ}_{{D}_{k}}^{Sphere}$ d'au plus 20 dpt.

15. Procédé selon la revendication 13 ou 14, dans lequel le k^{ième} élément optique (14-k) est conçu avec une forme non sphérique.
